# FASCICULE DE BREVET EUROPEEN

(11) **EP 2 586 569 B1**
(45) Date de publication et mention de la délivrance du brevet: **26.12.2018**
(21) Numéro de dépôt: 12189689.8
(22) Date de dépôt: 24.10.2012
(51) Int. Cl.: B25B 7/12, B25B 27/10, B25B 27/14, B21D 39/03, B23B 45/00, B25F 3/00, H01R 43/042, B25B 21/00

(54) **Outil à mâchoires pour un outil électroportatif à moteur rotatif**
Klemmbackenwerkzeug für ein mobiles Elektrowerkzeug mit Rotationsmotor
Tool with jaws for a hand-held power tool with rotary motor

(30) Priorité: 27.10.2011 FR 1159773
(43) Date de publication de la demande: 01.05.2013
(73) Titulaire: Etablissements Pierre Grehal et Cie SA, 95560 Baillet en France (FR)
(72) Inventeur: Marcon, Lionel, 95620 Parmain (FR)
(74) Mandataire: Rataboul, Xavier

(56) Documents cités:
- JP-A- 2001 315 069
- US-A- 6 138 346

## Description

L'invention concerne un outil à mâchoires adapté pour être monté sur un outil électroportatif à moteur rotatif, par exemple sur une perceuse.

Il n'est pas toujours pratique pour un installateur de devoir porter avec lui un ensemble d'outils électroportatifs dont chacun est spécifique pour un travail particulier, notamment en raison du poids et du volume de ces outils qui dépendent de la force et donc de la taille du moteur électrique de chacun de ces outils. Cet inconvénient est particulièrement remarquable, lorsque l'installateur ne se sert d'une partie de ces outils que rarement. Il est souhaitable qu'il puisse disposer de différents accessoires adaptés pour être montés par exemple sur une perceuse, donc sur un outil dont l'installateur a systématiquement besoin pour ses travaux. Un exemple en est l'aménagement intérieur de maisons ou d'autres espaces où des cloisons doivent être installées et où l'installateur peut avoir occasionnellement besoin d'un outil à sertir ou d'une agrafeuse.

Le but de l'invention est de proposer un outil à mâchoires adapté pour être monté sur un outil électroportatif à moteur rotatif.

Les documents US 6 138 346 et JP 2001 315069 décrivent un outil à mâchoires adapté pour être monté sur un outil électroportatif à moteur rotatif, mais ces outils comprennent un mécanisme de transmission peu précis et peu robuste.

Le but de l'invention est atteint avec un outil à mâchoires adapté pour être monté sur un outil électroportatif à moteur rotatif comportant un mandrin adapté pour recevoir un axe d'entrée de l'outil à mâchoires.

Selon l'invention, l'outil à mâchoires comprend un corps à l'intérieur duquel sont logés une extrémité de l'axe d'entrée, une extrémité de chacune de deux mâchoires et un mécanisme de transmission adapté pour transformer la rotation de l'axe d'entrée en un pivotement relatif d'au moins une des deux mâchoires par rapport à l'autre entre une position ouverte et une position fermée des mâchoires, ainsi que des moyens de fixation adaptés pour relier le corps de l'outil à mâchoires à l'outil électroportatif de façon à empêcher toute rotation du corps par rapport à l'outil électroportatif.

Selon le mode de réalisation choisi, l'outil à mâchoires peut être un accessoire adapté pour transformer par exemple une perceuse ou une visseuse sans fil en un outil à sertir, une agrafeuse ou un outil de serrage.

La présente invention concerne également les caractéristiques ci-après, considérées isolément ou selon toute combinaison techniquement possible :
- le mécanisme de transmission comprend une vis sans fin solidaire en rotation de l'axe d'entrée, une roue dentée engrenant avec la vis sans fin et comportant une excroissance disposée de façon à actionner cycliquement, lorsque l'outil à mâchoires est entraîné, un poussoir relié aux mâchoires par deux bielles ;
- les mâchoires comportent chacune un bras de commande, les deux bras de commande et les deux bielles étant reliés entre eux de façon à former un quadrilatère ;
- le mécanisme de transmission comprend un ressort assurant que les mâchoires se trouvent en position ouverte lorsque l'outil à mâchoires est en position de repos ou non entraîné ;
- les mâchoires comportent respectivement un poinçon de sertissage et une matrice ;
- les mâchoires ont la forme de mâchoires d'agrafeuse ;
- les moyens de fixation comprennent un cadre de serrage adapté pour recevoir la poignée ou le boîtier d'alimentation électrique de l'outil électroportatif, et deux bras reliant le cadre de serrage au corps de l'outil à mâchoires.

D'autres caractéristiques de l'invention et des avantages ressortiront de la description ci-après de deux modes de réalisation de l'outil à mâchoires. La description est faite en référence aux dessins annexés dont
la figure 1 représente schématiquement la disposition d'un outil de l'invention par rapport à un outil électroportatif sur lequel il est monté,
la figure 2 représente l'agencement intérieur d'un outil selon un premier mode de réalisation de l'invention en position fermée de l'outil,
la figure 3 représente l'outil de la figure 2 en une vue en perspective sur le côté extérieur du corps de l'outil,
la figure 4 représente l'outil de la figure 2 en position ouverte de l'outil,
la figure 5 représente l'agencement intérieur d'un outil selon un second mode de réalisation de l'invention en position fermée de l'outil et
la figure 6 représente l'agencement intérieur de l'outil de la figure 4 en position ouverte de l'outil.

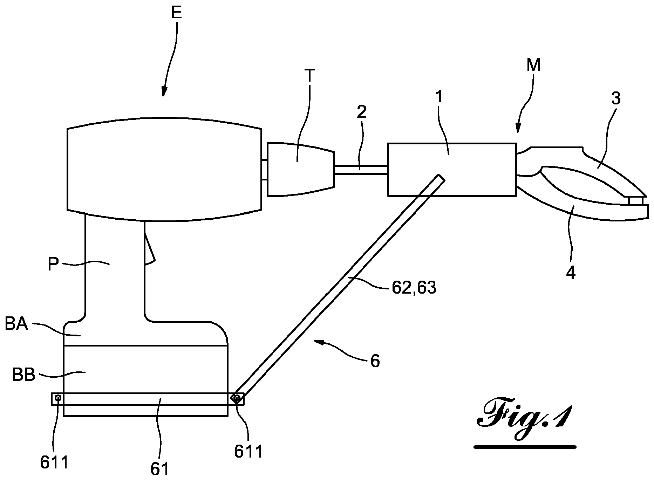

La figure 1 représente schématiquement un outil à mâchoires M, ici un outil à sertir, monté sur une perceuse électrique sans fil E. L'outil à sertir M comprend un corps 1 comportant à une de ses deux extrémités opposées un axe d'entrée 2 et à l'autre extrémité deux mâchoires 3, 4 conformées pour le sertissage de profilés. Les mâchoires 3, 4 sont actionnées par l'axe d'entrée 2.

La perceuse électrique E comprend un mandrin T dans lequel est fixé l'axe d'entrée 2 de l'outil à sertir M, ainsi qu'une poignée P et un boîtier d'alimentation électrique BA avec une batterie rechargeable BB.

Outre par l'axe d'entrée 2, l'outil M est fixé sur la perceuse E par des moyens de fixation 6 comprenant un cadre de serrage 61 et deux bras 62, 63 reliant le cadre de serrage 61 au corps 1 de l'outil à mâchoires M. Le cadre de serrage 61 est formé par deux brides disposées parallèlement l'une à l'autre et espacées l'une de l'autre pour recevoir entre elles le boîtier d'alimentation électrique BA, et deux tiges filetées avec des écrous 611, par exemple des écrous à oreilles, reliant les brides entre elles à leurs extrémités et permettant de serrer le cadre 61 sur le boîtier BA. Toutefois, le cadre de serrage 61 peut aussi être réalisé de toute autre façon, par exemple en une seule pièce et avec des vis traversant les parties du cadre et prenant appui sur le boîtier BA ou sur la batterie rechargeable BB.

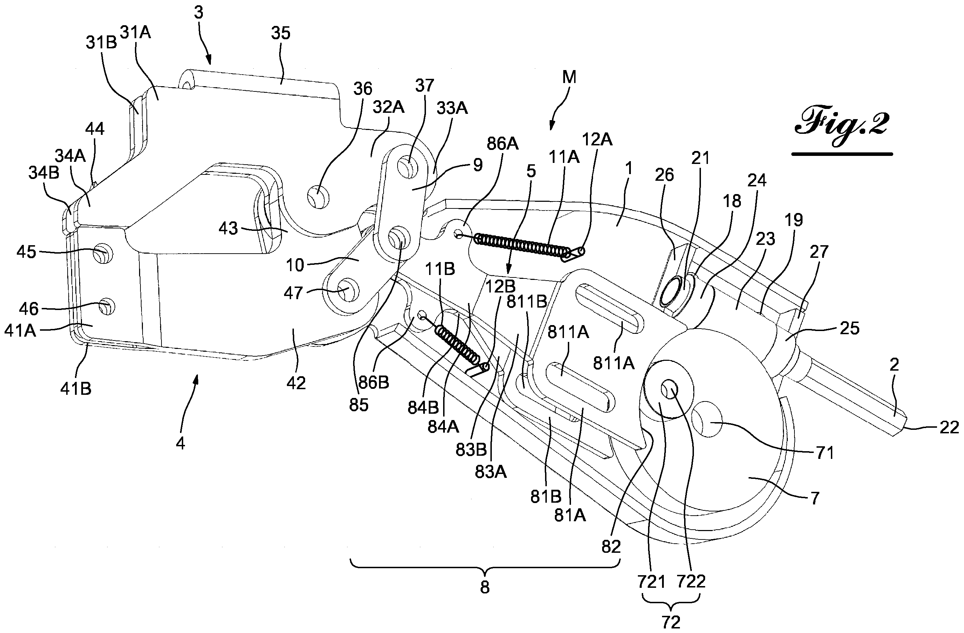

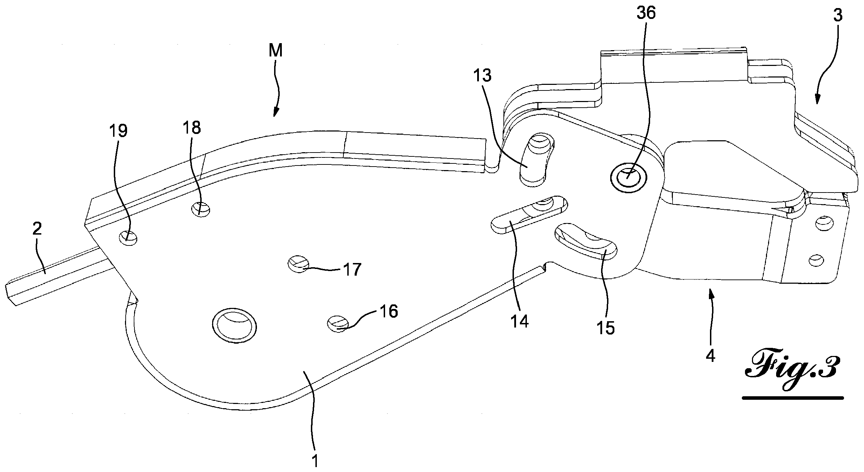

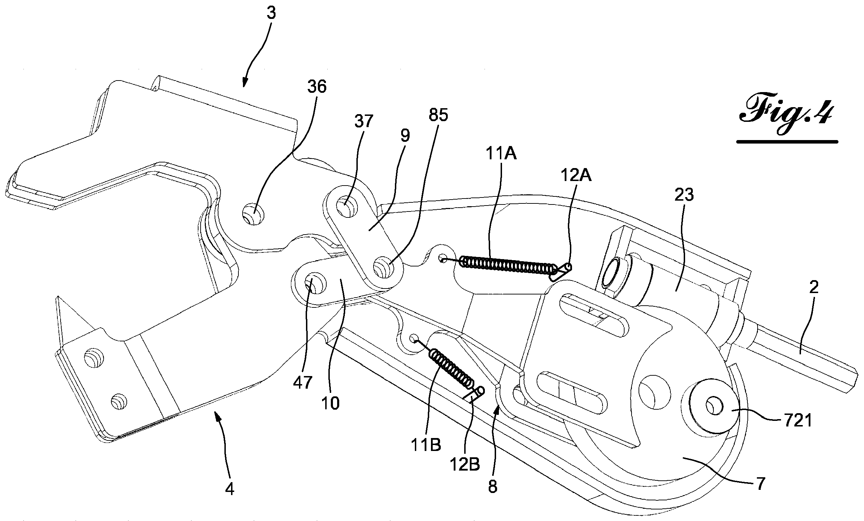

Les figures 2 à 4 représentent respectivement l'agencement intérieur (figures 2 et 4) et l'agencement extérieur (figure 3) d'un outil à sertir M en tant que premier mode de réalisation de l'invention. L'outil M comprend, outre l'axe d'entrée 2 et les mâchoires 3, 4 dépassant des extrémités opposées du corps 1, un mécanisme de transmission 5 reliant l'axe d'entrée 2 aux mâchoires 3, 4 et transformant la rotation de l'axe d'entrée 2 en un pivotement des deux mâchoires 3, 4 l'une par rapport à l'autre entre une position ouverte et une position fermée des mâchoires.

L'axe d'entrée 2, qui comporte deux extrémités opposées 21, 22, traverse axialement une vis sans fin 23 et est solidaire en rotation avec celle-ci. L'axe d'entrée 2 est logé par la première extrémité 21, ensemble avec la vis sans fin 23, dans le corps 1 alors que la seconde extrémité 22 est destinée à être introduite dans le mandrin T de la perceuse E.

L'axe d'entrée 2 et la vis sans fin 23 sont logés dans le corps 1 moyennant deux paliers 24, 25 logés à l'intérieur du corps 1 entre des brides 26, 27 fixées sur la corps 1 par des vis ou rivets 18, 19. La vis sans fin 23, qui est au début de la chaîne de transmission du mécanisme de transmission 5, engrène avec une roue dentée 7 montée en rotation autour d'un axe 71 disposé transversalement par rapport à l'étendue longitudinale de l'axe d'entrée 2. La roue dentée 7 comporte sur chacune de ses deux faces opposées et proche de son pourtour, une excroissance 72 remplissant la fonction d'une came. Les deux excroissances 72 sont réalisées comme galets 721 montés sur un axe commun 722 disposé parallèlement à l'axe 71 de la roue dentée 7 et traversant cette dernière.

Dans la chaîne de transmission du mécanisme de transmission 5, la roue dentée 7 est suivie d'un poussoir 8 ayant, du côté orienté vers la roue dentée 7, deux bras 81A, 81B s'étendant dans des plans parallèles l'un à l'autre et espacés l'un de l'autre et ayant des extrémités concaves 82 sur lesquelles les galets 721 prennent appui cycliquement au rythme dicté par la rotation de la roue dentée 7. Chacun des bras 81A, 81B est pourvu de deux trous oblongs 811A, 811B dans lesquels sont engagés des picots (non représentés) disposés sur les deux faces intérieures opposées du corps 1 ou deux tiges traversant le corps 1 et logées dans des trous 16, 17 (figure 3), qui assurent un déplacement en translation du poussoir 8 dans le sens de la longueur du corps 1. Le poussoir 8 comprend en plus deux parties obliques 83A, 83B prolongeant les bras 81A, 81B et les ramenant vers un plan médian de part et d'autre duquel le poussoir 8 se termine sur des parties 84A, 84B traversées par un axe 85 disposé transversalement audit plan médian. L'axe 85 et les axes indiqués au paragraphe ci-après sont représentés par les orifices dans lesquels ils sont placés.

Le poussoir 8 est relié aux mâchoires 3, 4 par deux paires de bielles 9, 10 montées de part et d'autre du poussoir par l'une de leurs extrémités opposées sur l'axe 85 du poussoir 8 et par l'autre de leurs extrémités sur des axes 37, 47 respectivement de la mâchoire 3 et de la mâchoire 4. Les deux mâchoires 3, 4 sont montées pivotant autour d'un axe commun 36 disposé à l'intérieur du corps 1.

La mâchoire 3 est une pièce ayant une section transversale en U et présentant ainsi deux parties centrales 31A, 31B reliées l'une à l'autre par un dos 35. Les deux parties 31A, 31B s'étendent dans des plans parallèles l'un à l'autre et espacés l'un de l'autre et forment par leurs extrémités libres 34A, 34B une matrice dans laquelle s'engage, en position fermée des mâchoires 3, 4, un poinçon de sertissage 44. En s'éloignant des extrémités libres 34A, 34B, les deux parties centrales 31A, 31B sont prolongées par des parties pivot 32A, 32B par lesquelles la mâchoire 3 est montée sur l'axe 36 et qui sont suivies par des bras de commande 33A, 33B prolongeant les parties centrales 31A, 31B au-delà de l'axe 36. Les extrémités libres des bras de commande 33A, 33B de la mâchoire 3 sont reliées aux bielles 9 commandant le pivotement de la mâchoire 3, par l'axe 37.

La mâchoire 4 est une pièce en la forme d'un L avec une partie de travail fourchue ayant deux joues parallèles 41A, 41B entre lesquelles le poinçon de sertissage 44 est fixé de manière amovible, par exemple par des vis engagées dans des trous taraudés 45, 46. La mâchoire 4 comprend en outre une partie angulaire 42 à laquelle sont attachées les bielles 10 moyennant l'axe 47 et un bras de commande 43 par lequel la mâchoire 4 est montée, ensemble avec la mâchoire 3, sur l'axe commun 36. Le pivotement de la mâchoire 4 est commandé par les bielles 10.

Ainsi, les bras de commande 33A, 33B, 43 et les deux paires de bielles 9, 10 sont reliés entre eux de part et d'autre du poussoir 8 de façon à former des quadrilatères à géométrie variable en fonction de la position momentanée du poussoir 8 et de la position des mâchoires 3, 4 qui en découle.

Lorsque l'outil M est en position de repos, les mâchoires 3, 4 sont maintenues en position ouverte par le poussoir 8 tiré vers la droite (sur la figure 4) par deux ressorts de rappel 11A, 11B fixés sur des oreilles 86A, 86B du poussoir 8 et des points d'ancrage 12A, 12B formés à l'intérieur du corps 1.

Lorsque l'outil M est entraîné, via l'axe d'entrée 2, par la perceuse E, la roue dentée 7 tourne et les galets 721 poussent le poussoir 8 vers la gauche (sur la figure 2) chaque fois que les galets prennent appui sur les extrémités concaves 82 du poussoir 8. Cette translation du poussoir 8 fait bouger les paires de bielles 9, 10 de façon à faire pivoter les mâchoires 3, 4 l'une vers l'autre et donc vers la position fermée.

Pendant le pivotement des mâchoires 3, 4, dans un sens ou l'autre, entre la position ouverte et la position fermée, les axes 37, 85 et 47 sont guidés par des trous oblongs 13, 14 et 15 formés dans le corps 1, à savoir l'axe 37 est guidé par le trou oblong courbe 13, l'axe 85 est guidé par le trou oblong droit 14 et l'axe 47 est guidé par le trou oblong courbe 15.

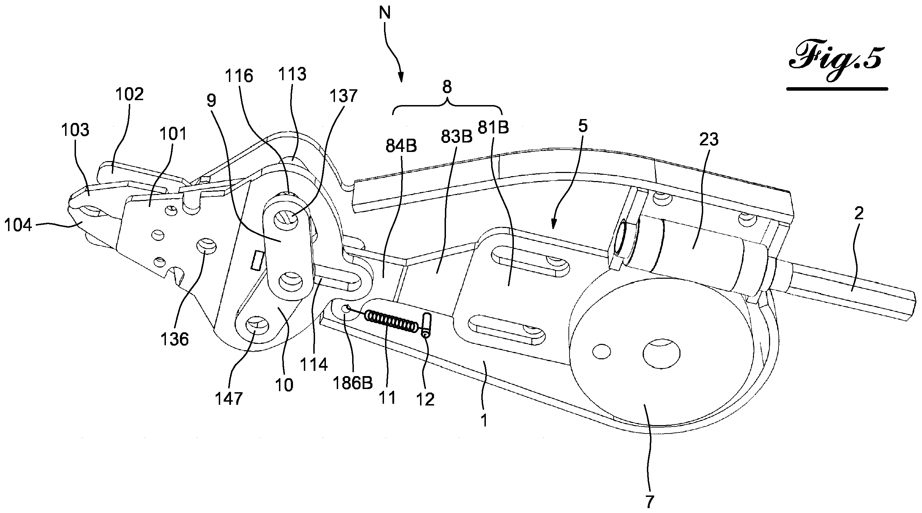

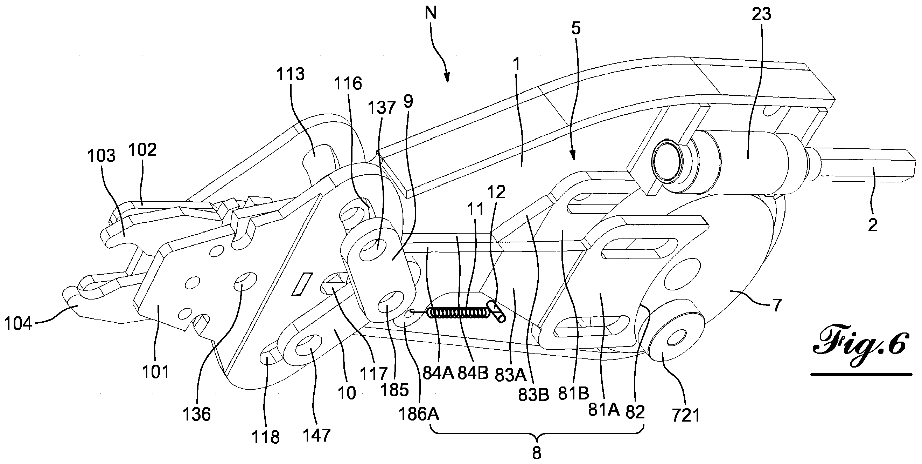

Les figures 5 et 6 représentent l'agencement intérieur d'une agrafeuse N en tant que second mode de réalisation de l'invention. L'outil est représenté en position fermée sur la figure 5 et en position ouverte sur la figure 6.

L'agencement intérieur de l'agrafeuse N correspond dans sa plus grande partie à l'agencement intérieur de l'outil à sertir M. Pour cette raison, les éléments de l'agrafeuse N qui sont identiques ou correspondent à des éléments de l'outil à sertir M portent les mêmes numéros de référence que ces derniers.

L'agrafeuse N comprend, outre l'axe d'entrée 2 et des mâchoires 103, 104 dépassant sur des côtés opposés du corps 1, un mécanisme de transmission 5 reliant l'axe d'entrée 2 aux mâchoires 103, 104 et transformant la rotation de l'axe d'entrée 2 en un pivotement des deux mâchoires 103, 104 l'une par rapport à l'autre entre une position ouverte et une position fermée des mâchoires.

L'axe d'entrée 2 est logé par la première de ses deux extrémités opposées 21, 22 dans le corps 1 et est pourvu d'une vis sans fin 23 solidaire en rotation de l'axe d'entrée 2. La seconde extrémité 22 est destinée à être introduite dans le mandrin T de la perceuse E.

La vis sans fin 23, qui est au début de la chaîne de transmission du mécanisme de transmission 5, engrène avec une roue dentée 7 montée en rotation autour d'un axe 71 disposé transversalement par rapport à l'étendue longitudinale de l'axe d'entrée 2. La roue dentée 7 comporte sur chacune de ses deux faces opposées et proche de son pourtour, une excroissance 72 remplissant la fonction d'une came. Les deux excroissances 72 sont réalisées comme galets 721 montés sur un axe 722 disposé parallèlement à l'axe 71 de la roue dentée 7 et traversant cette dernière.

Dans la chaîne de transmission du mécanisme de transmission 5, la roue dentée 7 est suivie d'un poussoir 8 ayant, du côté orienté vers la roue dentée 7, deux bras 81A, 81B s'étendant dans des plans parallèles l'un à l'autre et espacés l'un de l'autre et ayant des extrémités concaves 82 sur lesquelles agissent les galets 721 cycliquement au rythme dicté par la rotation de la roue dentée 7. Le poussoir 8 comprend en plus deux parties obliques 83A, 83B prolongeant les bras 81A, 81B et les ramenant vers un plan médian de part et d'autre duquel le poussoir 8 se termine sur des parties 84A, 84B traversées par un axe 185 disposé transversalement audit plan médian.

Le poussoir 8 est relié aux mâchoires 103, 104 par deux paires de bielles 9, 10 montées par l'une de leurs extrémités opposées sur l'axe 185 du poussoir 8 et par l'autre de leurs extrémités sur des axes 137, 147 respectivement de la mâchoire 103 et de la mâchoire 104. Les deux mâchoires 103, 104 sont montées pivotant autour d'un axe commun 136 tenu à l'intérieur du corps 1 par deux plaques 101, 102 complétant le corps 1.

Pour tenir compte des particularités du fonctionnement d'une agrafeuse, notamment par opposition au fonctionnement d'un outil à sertir, les mâchoires 103 et 104 ont des extrémités libres en forme de bec d'oiseau adaptées à la forme des agrafes pour lesquelles l'outil est conçu.

Ainsi, les deux mâchoires 103, 104 et les deux paires de bielles 9, 10 sont reliées entre elles de façon à former un quadrilatère à géométrie variable en fonction de la position momentanée du poussoir 8 et de la position des mâchoires 103, 104 qui en découle.

Lorsque l'outil M est en position de repos, les mâchoires 103, 104 sont maintenues en position ouverte par le poussoir 8 tiré vers la droite (sur la figure 6) par un ressort de rappel 11 fixé sur des oreilles 186 du poussoir 8 et un point d'ancrage 12 formé à l'intérieur du corps 1.

Lorsque l'outil M est entraîné, via l'axe d'entrée 2, par la perceuse E, la roue dentée 7 tourne et les galets 721 poussent le poussoir 8 vers la gauche (sur la figure 4) chaque fois que les galets prennent appui sur les extrémités concaves 82 du poussoir 8. Cette translation du poussoir 8 fait bouger les bielles 9, 10 de façon à faire pivoter les mâchoires 103, 104 l'une vers l'autre et donc vers la position fermée.

## Revendications

1. Outil à mâchoires (M) adapté pour être monté sur un outil électroportatif à moteur rotatif (E), l'outil électroportatif (E) comportant un mandrin (T) adapté pour recevoir un axe d'entrée (2) de l'outil à mâchoires (M), l'outil à mâchoires comprenant un corps (1) à l'intérieur duquel sont logés une extrémité (21) de l'axe d'entrée (2), une extrémité (32, 42) de chacune de deux mâchoires (3, 4) et un mécanisme de transmission (5) comprenant une vis sans fin (23) solidaire en rotation de l'axe d'entrée (2) et une roue dentée (7) engrenant avec la vis sans fin (23) pour transformer la rotation de l'axe d'entrée (2) en un pivotement relatif d'au moins une (4) des deux mâchoires (3, 4) par rapport à l'autre (3) entre une position ouverte et une position fermée des mâchoires (3, 4), ainsi que des moyens de fixation (6) adaptés pour relier le corps (1) de l' outil à mâchoires (M) à l' outil électroportatif (E) de façon à empêcher toute rotation du corps (1) par rapport à l'outil électroportatif (E),
**caractérisé en ce que** la roue dentée (7) comporte au moins une excroissance (72) disposée de façon à actionner cycliquement, lorsque l'outil (M) est entraîné, un poussoir (8) monté en translation dans le sens de la longueur du corps (1) et relié aux mâchoires (3, 4) par deux bielles (9, 10) et **en ce que** le mécanisme de transmission (5) comprend en outre un ressort (11) assurant que les mâchoires (3, 4) se trouvent en position ouverte lorsque l'outil (M) est en position de repos ou non entraîné.

2. Outil selon la revendication 1, **caractérisé en ce que** les mâchoires (3, 4) comportent chacune un bras de commande (33, 43) et **en ce que** les deux bras de commande (33, 43) et les deux bielles (9, 10) sont reliés entre eux de façon à former un quadrilatère.

3. Outil selon la revendication 1 ou 2, **caractérisé en ce que** les mâchoires (3, 4) comportent respectivement un poinçon de sertissage (44) et une matrice (34).

4. Outil selon l'une quelconque des revendications 1 à 3, **caractérisé en ce que** les mâchoires (103, 104) ont la forme de mâchoires d'agrafeuse.

5. Outil selon l'une quelconque des revendications 1 à 4, **caractérisé en ce que** les moyens de fixation (6) comprennent un cadre de serrage (61) adapté pour recevoir la poignée (P) ou le boîtier d'alimentation électrique (BA) de l'outil électroportatif (E), et deux bras (62, 63) reliant le cadre de serrage (61) au corps (1) de l'outil à mâchoires (M).

## Patentansprüche

1. Klemmbackenwerkzeug (M), das dafür ausgelegt ist, an einem tragbaren Elektrowerkzeug mit Rotationsmotor (E) angebracht zu werden, wobei das tragbare Elektrowerkzeug (E) ein Spannfutter (T) aufweist, das dafür ausgelegt ist, eine Eingangsachse (2) des Klemmbackenwerkzeugs (M) aufzunehmen, wobei das Klemmbackenwerkzeug einen Körper (1) umfasst, in dessen Innerem ein Ende (21) der Eingangsachse (2), ein Ende (32, 42) jeder von zwei Klemmbacken (3, 4) und ein Übertragungsmechanismus (5), der eine mit der Eingangsachse (2) drehfest verbundene Schnecke (23) und ein mit der Schnecke (23) in Eingriff stehendes Zahnrad (7) zum Umwandeln der Rotation der Eingangsachse (2) in eine relative Schwenkung wenigstens einer (4) der zwei Klemmbacken (3, 4) bezüglich der anderen (3) zwischen einer offenen Position und einer geschlossenen Position der Klemmbacken (3, 4) umfasst, aufgenommen sind, sowie Befestigungsmittel (6), die dafür ausgelegt sind, den Körper (1) des Klemmbackenwerkzeugs (M) mit dem tragbaren Elektrowerkzeug (E) so zu verbinden, dass jede Drehung des Körpers (1) bezüglich des tragbaren Elektrowerkzeugs (E) verhindert wird,
**dadurch gekennzeichnet, dass** das Zahnrad (7) wenigstens einen Vorsprung (72) aufweist, der so angeordnet ist, dass er, wenn das Werkzeug (M) angetrieben wird, zyklisch einen Schieber (8) betätigt, der in der Richtung der Länge des Körpers (1) translatorisch verschiebbar angebracht ist und mit den Klemmbacken (3, 4) durch zwei Schubstangen (9, 10) verbunden ist, und dadurch, dass der Übertragungsmechanismus (5) außerdem eine Feder (11) umfasst, die sicherstellt, dass sich die Klemmbacken (3, 4) in der offenen Position befinden, wenn sich das Werkzeug (M) in der Ruheposition befindet oder nicht angetrieben wird.

2. Werkzeug nach Anspruch 1, **dadurch gekennzeichnet, dass** die Klemmbacken (3, 4) jeweils einen Steuerarm (33, 43) aufweisen, und dadurch, dass die zwei Steuerarme (33, 43) und die zwei Schubstangen (9, 10) so miteinander verbunden sind, dass sie ein Viereck bilden.

3. Werkzeug nach Anspruch 1 oder 2, **dadurch gekennzeichnet, dass** die Klemmbacken (3, 4) einen Crimpstempel (44) bzw. eine Matrize (34) aufweisen.

4. Werkzeug nach einem der Ansprüche 1 bis 3, **dadurch gekennzeichnet, dass** die Klemmbacken (103, 104) die Form von Klemmbacken eines Heftgeräts haben.

5. Werkzeug nach einem der Ansprüche 1 bis 4, **dadurch gekennzeichnet, dass** die Befestigungsmittel (6) einen Spannrahmen (61), der dafür ausgelegt ist, den Griff (P) oder das Stromversorgungsgehäuse (BA) des tragbaren Elektrowerkzeugs (E) aufzunehmen, und zwei Arme (62, 63), die den Spannrahmen (61) mit dem Körper (1) des Klemmbackenwerkzeugs (M) verbinden, aufweisen.

## Claims

1. Jawed tool (M) that is suitable for mounting on a hand-held power tool with a rotary motor (E), the hand-held power tool (E) having a chuck (T) suitable for receiving an input shaft (2) of the jawed tool (M), the jawed tool comprising a body (1) inside which are housed one end (21) of the input shaft (2), one end (32, 42) of each of the two jaws (3, 4) and a transmission mechanism (5) comprising a worm (23) that rotates as one with the input shaft (2) and a toothed wheel (7) meshing with the worm (23) to convert the rotation of the input shaft (2) into relative pivoting of at least one (4) of the two jaws (3, 4) with respect to the other (3) between an open position and a closed position of the jaws (3, 4), and also fastening means (6) suitable for connecting the body (1) of the jawed tool (M) to the hand-held power tool (E) so as to prevent any rotation of the body (1) with respect to the hand-held power tool (E),
**characterized in that** the toothed wheel (7) has at least one protuberance (72) arranged so as to cyclically actuate, when the tool (M) is driven, a pusher (8) mounted so as to move in translation in the lengthwise direction of the body (1) and connected to the jaws (3, 4) by two links (9, 10), and **in that** the transmission mechanism (5) also comprises a spring (11) that ensures that the jaws (3, 4) are in an open position when the tool (M) is in an idle or non-driven position.

2. Tool according to Claim 1, **characterized in that** the jaws (3, 4) each have a control arm (33, 43), and **in that** the two control arms (33, 43) and the two links (9, 10) are connected to each other so as to form a quadrilateral.

3. Tool according to Claim 1 or 2, **characterized in that** the jaws (3, 4) respectively have a crimp indenter (44) and a die (34).

4. Tool according to any one of Claims 1 to 3, **characterized in that** the jaws (103, 104) are in the form of crimper jaws.

5. Tool according to any one of Claims 1 to 4, **characterized in that** the fastening means (6) comprise a clamping frame (61) suitable for receiving the handle (P) or the power pack (BA) of the hand-held power tool (E), and two arms (62, 63) that connect the clamping frame (61) to the body (1) of the jawed tool (M).
